# EUROPÄISCHE PATENTSCHRIFT

(11) **EP 3 825 155 B1**
(45) Veröffentlichungstag und Bekanntmachung des Hinweises auf die Patenterteilung: **15.05.2024**
(21) Anmeldenummer: 20020549.0
(22) Anmeldetag: 22.11.2020
(51) Int. Cl.: B62D 55/065

(54) **VORRICHTUNG UND VERFAHREN ZUR BODENDRUCKVERTEILUNG**
DEVICE AND METHOD FOR FLOOR PRESSURE DISTRIBUTION
DISPOSITIF ET PROCÉDÉ DE RÉPARTITION DE LA PRESSION DU SOL

(30) Priorität: 25.11.2019 LU 101495
(43) Veröffentlichungstag der Anmeldung: 26.05.2021
(73) Patentinhaber: Hellgeth engineering Spezialfahrzeugbau GmbH, 07343 Wurzbach (DE)
(72) Erfinder: Hellgeth, Jürgen, 07343 Wurzbach (DE); Hellgeth, Andreas, 07343 Wurzbach (DE)
(74) Vertreter: Paustian & Partner Patentanwälte mbB

(56) Entgegenhaltungen:
- WO-A1-2011/037521
- WO-A2-2012/125903
- DE-A1-102004 059 823
- GB-A- 2 021 058
- GB-A- 2 387 582
- JP-A- 2009 113 672

## Beschreibung

Die vorliegende Erfindung bezieht sich auf eine Vorrichtung und ein Verfahren zur Bodendruckverteilung bei Knicklenkerfahrzeugen. Diese Fahrzeuge sind zumeist zweiwägig, d.h. sie umfassen zumindest einen Vorderwagen und einen Hinterwagen. Ein Gelenk verbindet gewöhnlicherweise den Vorder- und Hinterwagen miteinander und weiterhin weisen diese Fahrzeuge Räder und/oder (Antriebs-)Ketten auf. In der vorliegenden Offenbarung werden der Einfachheit halber zweiwägige Fahrzeuge betrachtet, jedoch gilt diese Offenbarung mutatis mutandis ebenso für Fahrzeuge mit drei oder mehr Wägen, die durch Gelenke verbunden sind.

Jedes Fahrzeug bewirkt durch seine Masse und eine Vielzahl von statischen und dynamischen Faktoren gewissen Kräfte in seinen Aufstandsflächen. Neben der Schwerpunktlage sind das u.a. die Spurweite, Lage, Länge und Anzahl der Aufstandsflächen, Beschleunigungen, Verzögerungen, Querbeschleunigungen, Fahrwiderstände aller Art und auch Feder- und Dämpferkennwerte. Zu den Fahrwiderständen zählen insbesondere auch Steigungen.

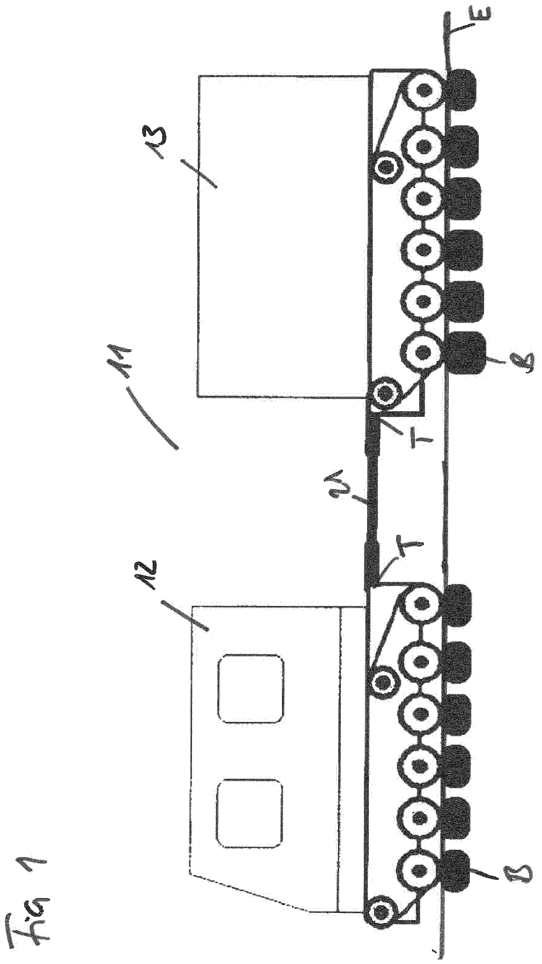

Bei einem auf einer ebenen Fläche (Standebene) stehenden Fahrzeug wird eine Normalkraft bzw. in diesem Fall Gewichtskraft bzw. Aufstandskraft des Fahrzeugs über die Reifen oder Ketten senkrecht in die Standebene geleitet bzw. ist zu dieser gerichtet. Dies geschieht über die Aufstandsflächen der Reifen oder Ketten. Weiterhin ist eine Bodendruckverteilung über die Aufstandsflächen gleichmäßig (siehe Figur 1). In Figur 1 ist ein Kettenfahrzeug dargestellt, jedoch gilt diese offenbarung mutatis mutandis auch für Radfahrzeuge oder gemischte Rad-Kettenfahrzeuge (z.B. sog. Halbkettenfahrzeuge).

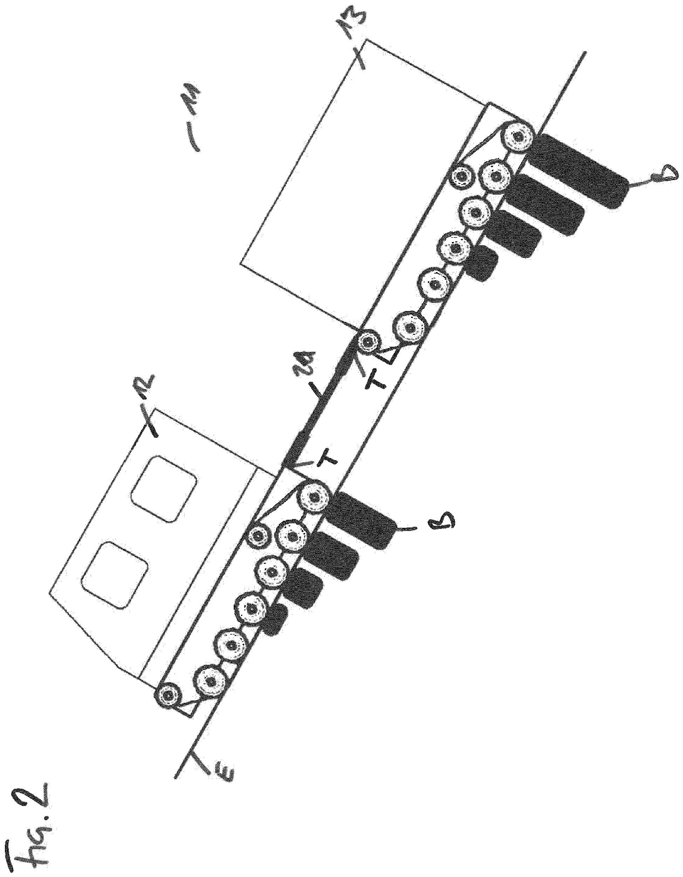

Wenn ein Fahrzeug auf einer schiefen Ebene bzw. entlang eines Hanges bewegt wird (es wird hier der Einfachheit halber immer der Fall betrachtet, in welchem sich das Fahrzeug parallel zur Falllinie bewegt oder steht), dann verändern sich die, über die Aufstandsflächen, in die schiefe Ebene eingeleiteten Kräfte bzw. die Bodendruckverteilung ist nicht mehr gleichmäßig (siehe Figur 2) bzw. verschiebt sich entgegen der Fahrtrichtung bzw. Bewegungsrichtung.

Beim Fahren und auch im Stand hangaufwärts ergibt sich aus der Normalkraft (siehe oben) und der Hangabtriebskraft eine resultierende Kraft, welche die Aufstandskräfte und die Bodendruckverteilung in Richtung Heck des Fahrzeuges verschiebt (siehe Figuren 1 und 2).

Wie in Figur 1 zu sehen sind im Stand die einzelnen Bodendrücke (Balken) unter den Laufrollen des Kettenfahrwerks relativ gleichmäßig und niedrig. Bei demselben Fahrzeug erreichen die Bodendrücke des Fahrzeugs, wenn es auf einer schiefen Ebene steht, fast den dreifachen Betrag bedingt durch die o.g. Verschiebung.

Ebenso ergibt sich eine Ungleichverteilung des Bodendruckes, wenn das Fahrzeug hangabwärts fährt oder steht, in umgekehrten Sinn. Die Kräfte verlagern sich Richtung Talseite, wo dann lokal der Bodendruck zunimmt.

Für ein Geländefahrzeug ist die o.g. Verschiebung von entscheidender Bedeutung, da dies lokal zu einem höheren Bodendruck (siehe Figur 2) führt und in Folge entstehen dort auch höhere Antriebskräfte bzw. Scherkräfte. Der Boden gibt nach, die Antriebsmittel (Ketten oder Reifen) rutschen durch bzw. haben Schlupf. Der Effekt wird durch das tiefere Einsinken in diesem Bereich und durch ein Nachgeben der Fahrwerksfederung, was beides zum "Aufbäumen" (Hochnehmen der Fahrzeugfront bzw. der Front von Vorder- und Hinterwagen bei Vorwärtsfahrt) des Fahrzeugs führt.

Je kürzer die Aufstandsfläche des Fahrzeuges, je höher der Schwerpunkt und je weicher die Fahrwerksfederung ist, desto stärker neigt es zum Aufbäumen am Berg und in Folge zu Traktionsverlust auf weichem Boden. Gerade bei Knicklenkerfahrzeugen mit mindestens einer Drehachse quer zur Fahrtrichtung lässt sich dies gut beobachten.

Physikalisch lassen sich Vorder- und Hinterwagen in dieser Situation als kurze Einzelfahrzeuge betrachten.

Um der Forderung nach größeren Nutzlasten bei einem gleichbleibend geringen Bodendruck gerecht zu werden, müssen zwangsläufig die Aufstandsflächen des Fahrzeugs vergrößert werden. Eine Vergrößerung der Aufstandsfläche ist bei kettengetriebenen Fahrzeugen durch eine Verbreiterung und/oder Verlängerung der Antriebskette(n) möglich.

Folglich vergrößert sich der Wendekreis des Fahrzeugs (bei gleichbleibenden maximalem Lenkwinkel), wodurch die Manövrierfähigkeit und Mobilität erheblich eingeschränkt werden kann. Speziell in schwierigem Gelände, wie Gebirgspässen oder Waldgassen mit geringem Platzangebot, ist dann z.B. ein Wenden sehr umständlich bis unmöglich und je nach Terrain auch gefährlich.

Darüber hinaus ergibt sich eine dynamische Veränderung des Bodendrucks bei Beschleunigen oder Bremsen eines Fahrzeuges in der Ebene (Aufbäumen/Eintauchen).

Eine Ansteuerung eines Hydraulikzylinders im Gelenk des Knicklenkerfahrzeuges Bandvagn 206 (Bv206) der Fa. Hägglunds wird dazu genutzt, den Vorder- und Hinterwagen zum Gelenk hin und um jeweils eine Querachse aufzukippen, um einen Wendekreis zu reduzieren und/oder Hindernisse leichter zu überfahren (GB2021058A). Diese Querachse wird auch "Tiltachse" genannt und bezieht sich auf eine Achse, welche die Zeichnungs- bzw. Blattebene in den Figuren 1 und 2 senkrecht durchstößt und damit rechtwinklig zu einer Fahrtrichtung und einer Hochachse bei einem in der Ebene stehenden Fahrzeug bzw. parallel zur Quererstreckung des Fahrzeugs oder auch der Achsen (Laufrollen oder Räder) ist. Für gewöhnlich weist ein z.B. Knicklenkerfahrzeug, wie es in den Figuren 1 und 2 dargestellt ist, je eine Tiltachse bzw. Querachse pro Wagen (d.h. Vorderwagen und Hinterwagen) auf. Diese Tiltachsen sind im Bereich des, die beiden Wägen verbindenden, Gelenks angeordnet oder zwischen diesem Gelenk und dem jeweiligen Wagen.

Das Dokument WO 2012/125903 A2 offenbart ein ähnliches Bodendruckverteilsystem. Die vorliegende Erfindung hat es daher zur Aufgabe die Fahreigenschaften eines Knicklenkerfahrzeuges zu verbessern.

Diese Aufgabe wird durch die Vorrichtungen und Verfahren der beigefügten unabhängigen Ansprüche gelöst.

Nach einem Aspekt der vorliegenden Offenbarung wird ein Bodendruckverteilungssystem für ein zumindest zweiteiliges Fahrzeug vorgeschlagen. Dieses Fahrzeug kann z.B. ein Rad- und/oder Kettenfahrzeug sein. Das Bodendruckverteilungssystem umfasst eine Gelenkvorrichtung, zumindest einen Sensor und eine Steuerung, wobei der zumindest eine Sensor Fahrzeugdaten erfasst, die ein Aufbäumen bei Beschleunigen oder Eintauchen beim Bremsen des Fahrzeugs indizieren und mit der Steuerung verbunden ist. Weiterhin steuert die Steuerung zumindest einen Aktuator an, um einem Aufbäumen bei Beschleunigen oder Eintauchen beim Bremsen entgegenzuwirken. Der Aktuator ist wirkangeordnet bezüglich zumindest einer Tiltachse der Gelenkvorrichtung und wird abhängig von den Fahrzeugdaten angesteuert. Dieses System hat den Vorteil, dass abhängig von erfassten Fahrzeugdaten eine Bodendruckverteilung des Fahrzeuges gezielt beeinflusst und einem Aufbäumen bei Beschleunigen oder Eintauchen beim Bremsen des Fahrzeugs entgegengewirkt werden kann. Die Gelenkvorrichtung kann weiterhin dazu vorgesehen sein eine Kraft / ein Moment / ein Antriebsmoment von einen auf den anderen Wagen zu übertragen.

Die vom zumindest einen Sensor erfassten Fahrzeugdaten können zum Beispiel Antriebsdaten (z.B. Antriebsdrehmoment an einer beliebigen Stelle im Antriebsstrang oder auch an einem oder mehreren Punkten im Antriebsstrang, Motordrehzahl und/oder Motordrehmoment und eine Gangschaltstufe bzw. Getriebeübersetzung, Federungsdaten, Bremsverzögerungen, Bremskräfte, Bremsdrücke, Neigungsdaten oder Aktuatorpositionen oder Positionsdaten sein. Positionsdaten können die Fahrzeugposition (z.B. vermittels GPS mit/ohne topographische Daten) und/oder die Lage des Fahrzeugs (Fahrzeuglage) im Raum sein. Eine Erfassung von mehreren der o.g. Fahrzeugdaten ist ebenso möglich.

Weiterhin kann der zumindest eine Sensor zumindest eines erfassen von: dem Antriebsdrehmoment, einem Motordrehmoment und einer Gangstufe oder eine Fahrzeuglage erfassen. Dies ist vorteilhaft, da somit erkannt werden kann wie sehr das Fahrzeug z.B. zum Aufbäumen neigt und die Antriebskraft Einfluss auf die Bodendruckverteilung während der Fahrt hat. Weiterhin ist dies vorteilhaft, die Steuerung lediglich die Fahrzeuglage verwenden kann, um den zumindest einen Aktuator zu steuern und z.B. einem Aufbäumen entgegenwirken

Nach einem anderen Aspekt kann der zumindest eine Sensor des Bodendruckverteilungssystems das Bremsmoment erfassen. Dies ist vorteilhaft, da somit erkannt werden kann wie sehr das Fahrzeug z.B. zum Eintauchen neigt und die Bremskraft Einfluss auf die Bodendruckverteilung während der Fahrt hat.

Nach einem anderen Aspekt kann der zumindest eine Sensor bei dem Bodendruckverteilungssystem ein negatives Antriebsmoment (Bremsmoment) erfassen, z.B. über Bremsverzögerungen, Bremskräfte, Bremsdrücke etc. Dies ist vorteilhaft, da somit erkannt werden kann wie sehr das Fahrzeug z.B. Eintauchen neigt und die Bremskraft Einfluss auf die Bodendruckverteilung während der Fahrt hat.

Nach einem anderen Aspekt kann die Beeinflussung des Aktuators der Gelenkvorrichtung das Eintauchen beim Bremsvorgang vermindern, womit die Fahrsicherheit und die Bremsleistung erhöht wird.

Nach einem anderen Aspekt kann die Beeinflussung des Aktuators der Gelenkvorrichtung das Eintauchen beim Bremsvorgang vermindern, womit das Nachlassen der Kettenspannung (durch Eintauchen der vorderen Federelemente) reduziert wird. Damit wird wiederum die Neigung zum Überspringen der Kette auf dem Antriebsrad geringer.

Nach einem anderen Aspekt kann bei dem Bodendruckverteilungssystem der zumindest eine Sensor die Fahrzeugposition. Dies ist vorteilhaft, da somit entweder die Genauigkeit der Daten verbessert werden kann, welche der Steuerung zugeführt werden, wenn der weitere Sensor die Position des Fahrzeugs oder eine Fahrzeugneigung zusätzlich zu z.B. den Antriebsdaten erfasst. Oder die Steuerung kann lediglich die Fahrzeugposition und/oder Fahrzeuglage verwenden, um den zumindest einen Aktuator zu steuern und z.B. einem Aufbäumen entgegenwirken.

Nach einem anderen Aspekt kann das Bodendruckverteilungssystem weiterhin eine Fahrwerksfederung umfassen. Dies kann eine Bodendruckverteilung vorteilhafterweise beeinflussen. Unter einer Fahrwerksfederung kann ein Federungssystem mit mehreren Federungselementen oder zumindest ein Federungselement verstanden werden.

Nach einem anderen Aspekt kann das Bodendruckverteilungssystem zumindest einen Federungssensor umfassen. Dies kann vorteilhaft die Genauigkeit der Daten und die Genauigkeit/Qualität der Steuerung verbessern.

Nach einem anderen Aspekt kann der zumindest eine Federungssensor bei dem Bodendruckverteilungssystem einen Federweg und/oder eine Federkraft erfassen. Wie oben ausgeführt hat die Fahrwerksfederung Einfluss auf die Bodendruckverteilung und umgekehrt. Der Federungssensor kann daher zusätzlich zu den o.g. Daten der Steuerung Federungsdaten bereitstellen, was weiterhin die Genauigkeit der Daten und die Genauigkeit/Qualität der Steuerung verbessern kann. Erfasste Daten können außerdem ein Winkel der Fahrwerksfederung zu einem Bezugspunkt und/oder ein Abstand eines definierten Punktes der Fahrwerksfederung zur Fahrbahn sein.

Wenn mehrere Federungssensoren verwendet werden kann die Steuerung vorteilhafterweise eine Ladungsverteilung bzw. Gewichtsverteilung im Fahrzeug oder auch jeweils im Vorder- und Hinterwagen errechnen und in die Steuerung des zumindest einen Aktuators einfließen lassen.

Nach einem anderen Aspekt kann die Fahrwerksfederung bei dem Bodendruckverteilungssystem von der Steuerung angesteuert und verstellt werden. Somit kann durch Verstellung der Fahrwerksfederung gezielt die Bodendruckverteilung vorteilhaft beeinflusst werden.

Nach einem anderen Aspekt kann bei dem Bodendruckverteilungssystem der Aktuator ein elektrischer oder hydraulischer Aktuator sein. Das kann ein Vorteil sein, da so ausreichend große Kräfte durch den Aktuator auf die Gelenkvorrichtung aufgebracht werden.

Nach einem anderen Aspekt umfasst ein Verfahren zur Bodendruckverteilung bei einem zweiteiligen Rad- oder Kettenfahrzeug die Schritte:
- Erfassen von Fahrzeugdaten, die ein Aufbäumen beim Beschleunigen oder Eintauchen beim Bremsen indizieren;
- Verarbeiten der Fahrzeugdaten in einer Steuerung; und
- Ansteuern von zumindest einem Aktuator einer Gelenkvorrichtung durch die Steuerung, basierend auf den verarbeiteten Fahrzeugdaten, um einem Aufbäumen bei Beschleunigen oder Eintauchen beim Bremsen entgegenzuwirken. Das Erfassen der Fahrzeugdaten umfasst zumindest eines von: erfassen eines Antriebsmoments und/oder erfassen eines Motordrehmoments und einer Gangstufe und/oder erfassen einer Fahrzeugposition oder Fahrzeugneigung und/oder erfassen von Federungsdaten. Der zumindest eine Aktuator ist wirkangeordnet bezüglich zumindest einer Tiltachse der Gelenkvorrichtung. Somit kann vorteilhaft eine Bodendruckverteilung des Fahrzeugs beeinflusst werden.

Nach einem anderen Aspekt umfasst beim Verfahren zur Bodendruckverteilung der Schritt des Erfassens der Fahrzeugdaten ein Erfassen eines Antriebsmoments. Somit kann vermittels einfach verfügbarer Fahrzeugdaten vorteilhafterweise z.B. einem Aufbäumen des Fahrzeugs entgegengewirkt werden.

Nach einem anderen Aspekt umfasst beim Verfahren zur Bodendruckverteilung der Schritt des Erfassens der Fahrzeugdaten ein Erfassen eines Motordrehmoments und einer Gangstufe bzw. Getriebeübersetzung. Somit kann vermittels einfach verfügbarer Fahrzeugdaten vorteilhafterweise z.B. einem Aufbäumen des Fahrzeugs beim Beschleunigen oder ein Eintauchen bzw. Nicken beim Bremsen entgegengewirkt werden.

Nach einem anderen Aspekt umfasst beim Verfahren zur Bodendruckverteilung der Schritt des Erfassens der Fahrzeugdaten ein Erfassen einer Fahrzeugposition oder Fahrzeugneigung.

Nach einem anderen Aspekt umfasst beim Verfahren zur Bodendruckverteilung der Schritt des Erfassens der Fahrzeugdaten ein Erfassen von Federungsdaten. Dies kann vorteilhafterweise die Genauigkeit der Ansteuerung des Aktuators erhöhen.

Nach einem anderen Aspekt ist beim Verfahren zur Bodendruckverteilung im Schritt der Verarbeitung der Fahrzeugdaten durch die Steuerung eine Wiederholfrequenz dieser Verarbeitung bzw. Berechnung und Abfrage der Fahrzeugdaten von dem zumindest einen Sensor abhängig von einer Fahrgeschwindigkeit des Fahrzeuges. Tendenziell kann z.B. bei einer niedrigen Fahrgeschwindigkeit eine niedrigere Wiederholfrequenz durch die Steuerung verwendet werden, als bei einer höheren Fahrgeschwindigkeit. Die Wiederholfrequenz kann auch auf einen oder mehrere frei wählbare Werte eingestellt werden.

Nach einem anderen Aspekt ist beim Verfahren zur Bodendruckverteilung kann basierend auf den verarbeiteten Fahrzeugdaten zusätzlich zu dem zumindest einen Aktuator außerdem eine einstellbare Fahrwerksfederung angesteuert werden, sodass z.B. Federraten von einzelnen Fahrwerksfedern und/oder Federwege geändert werden, um so den Effekt der Bodendruckverteilung zu unterstützen.

Die voran genannten Vorteile und/oder Merkmale der Erfindung müssen nicht in allen Ausführungsformen gleichzeitig vorhanden sein, sondern können untereinander beliebig zu neuen Ausführungsformen kombiniert werden. Insbesondere können die Merkmale der Vorrichtungsansprüche in die Verfahrensansprüche aufgenommen und/oder mit diesen kombiniert werden und anders herum.

### Kurze Beschreibung der Figuren

Weitere Charakteristika und Vorteile der Erfindung werden im Verlauf der nachfolgenden Beschreibung einer ihrer Ausführungsformen ersichtlich, welche nur beispielhaft und nicht beschränkend in Zusammenschau mit den beigefügten schematischen Figuren gegeben wird. In den Figuren ist:
Figur 1 eine Darstellung von Kraftverhältnissen und Bodendruckverteilung eines Knicklenkerfahrzeuges stehenden in der Ebene;
Figur 2 eine Darstellung des angetriebenen Fahrzeuges aus Figur 1 am Berg ohne das erfindungsgemäße System;
Figur 3 eine Darstellung des angetriebenen Fahrzeuges aus Figur 1 am Berg mit dem erfindungsgemäßen System;
Figur 4 eine Darstellung einer Ausführungsform des erfindungsgemäßen Systems;
Figur 5 eine Darstellung einer weiteren Ausführungsform des erfindungsgemäßen Systems;

In den verschiedenen Figuren bezeichnen gleiche Bezugszeichen identische oder ähnliche Elemente bzw. Bauteile. Die Figuren sind beispielhafte Prinzipskizzen und Maßstäbe und/oder Verhältnisse können daraus nicht abgeleitet werden.

### Detaillierte Beschreibung der Ausführungsformen

Es wird anfänglich Bezug genommen auf die Figur 1, in welcher ein zweiwägiges Kettenfahrzeug 11 mit einem Vorderwagen 12 und einem Hinterwagen 13 dargestellt ist. Der Vorderwagen 12 ist mit dem Hinterwagen 13 über zwei Tiltachsen T verbunden. Diese Verbindung erfolgt über eine (passive) Gelenkvorrichtung 21. Das Fahrzeug 11 ist im Stand dargestellt und steht auf einer ebenen Standfläche bzw. Ebene E. Die sich unter den Laufrollen der Ketten ergebenden Bodendrücke sind durch die Balken B dargestellt. In der Darstellung der Figur 1 sind die einzelnen Bodendrücke im Wesentlichen gleichgroß und gleichmäßig verteilt.

In Figur 2 ist das in Figur 1 dargestellte Fahrzeug auf einer schiefen Ebene E dargestellt bei einer Bewegung hangaufwärts. Durch die eingangs erwähnte resultierende Verschiebung des Bodendrucks sind in der Figur 2 die Bodendrücke B unter den in Fahrtrichtung hintersten Laufrollen des Fahrwerks größer (lange Balken B) und nehmen dann graduell nach jeweils vorne und in Fahrtrichtung des Vorder- und Hinterwagens ab.

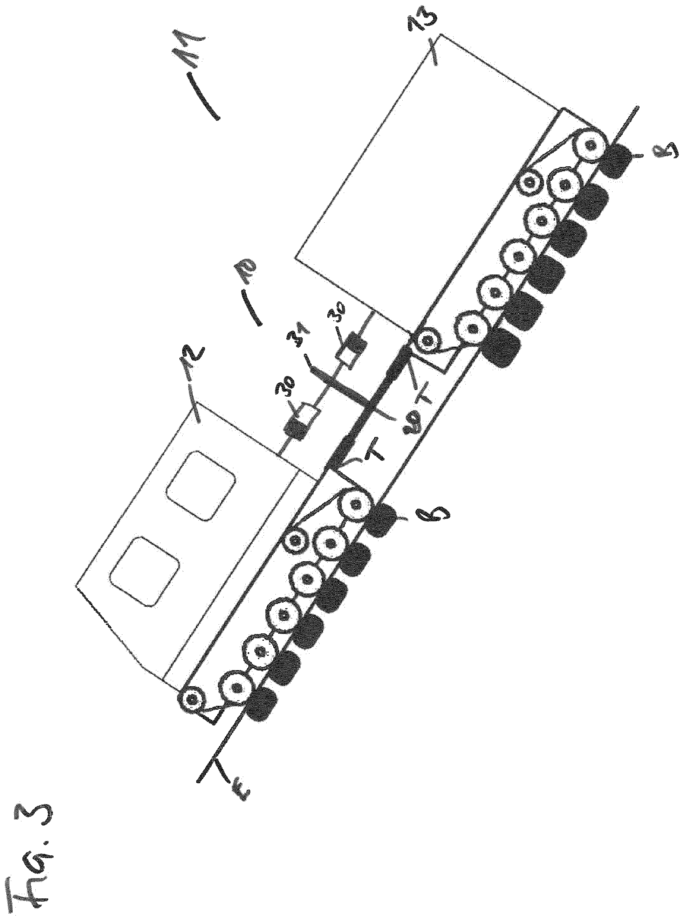

In Figur 3 ist ein Fahrzeug ähnlich den Figuren 1 und 2 dargestellt, jedoch verfügt das Fahrzeug 11 der Figur 3 über das erfindungsgemäße Bodendruckverteilungssystem 10. Das Bodendruckverteilungssystem 10 umfasst eine (aktive) Gelenkvorrichtung 20. Die Gelenkvorrichtung 20 umfasst einen Anschlagpunkt 31 zwischen den beiden Tiltachsen T. Zwischen dem Anschlagpunkt 31 und dem Vorderwagen 12 bzw. dem Hinterwagen 13 ist jeweils ein Aktuator 30 wirkangeordnet. Im vorliegenden Fall sind dies doppeltwirkende Hydraulikzylinder.

Durch die Aktuatoren 30, die Gelenkvorrichtung 20 und dem Anschlagpunkt 31 können Kräfte zwischen dem Vorderwagen 12 und der Gelenkvorrichtung 20 sowie dem Hinterwagen 13 und der Gelenkvorrichtung 20 aufgebracht werden. Wenn sich die Bodendruckverteilung, wie oben beschrieben durch z.B. eine Fahrt bergauf auf einer schiefen Ebene wie in Fig. 2 dargestellt, nach in Fahrtrichtung hinten verschiebt, dann können die Aktuatoren 30 angesteuert werden und durch Krafteinleitung in den Vorderwagen 12 und/oder Hinterwagen 13 die Bodendruckverteilung ändern bzw. ausgleichen. Damit kann eine Bodendruckverteilung wie in Figur 2 dargestellt auf eine Bodendruckverteilung wie in Figur 3 dargestellt geändert werden.

In der in Figur 3 dargestellten Situation würde z.B. der auf den Vorderwagen 12 wirkende Aktuator 30, der zwischen dem Vorderwagen 12 und dem Anschlagpunkt 31 angeordnet ist, eine Druckkraft auf den Vorderwagen 12 aufbringen, die diesen um die am Vorderwagen 12 angeordnete Tiltachse T in die schiefe Ebene bzw. Fahrbahn E drückt (Verlängern des Aktuators 30), sodass auf den vorderen Teil des Kettenlaufwerks des Vorderwagens 12 mehr Druck ausgeübt wird.

Optional kann der Hinterwagen 13 durch den hinteren Aktuator 30, welcher zwischen dem Anschlagpunkt 31 und dem Hinterwagen 13 angeordnet ist, ebenfalls durch ein Ziehen des Aktuators 30 in Bezug auf den Hinterwagens 31 (Verkürzen des Aktuators), sodass auf den vorderen Teil des Kettenlaufwerks des Hinterwagens 13 mehr Druck ausgeübt wird.

Die Aktuatoren werden durch eine Steuerung (nicht gezeigt) angesteuert, die ihrerseits Sensordaten von zumindest einem Sensor (nicht gezeigt) erfasst. Die Sensordaten beziehen sich auf Fahrzeugdaten. Diese Fahrzeugdaten können ausgewählt sein aus: einem Antriebsmoment, ein Motordrehmoment und eine Gangstufe (Getriebeübersetzung), eine Fahrzeugposition oder Fahrzeugneigung, Federungsdaten. Eine oder mehrere der voran genannten Fahrzeugdaten können durch einen oder mehrere Sensoren erfasst und durch die Steuerung verarbeitet werden. Der oder die Aktuatoren können dann entsprechend von der Steuerung beaufschlagt werden.

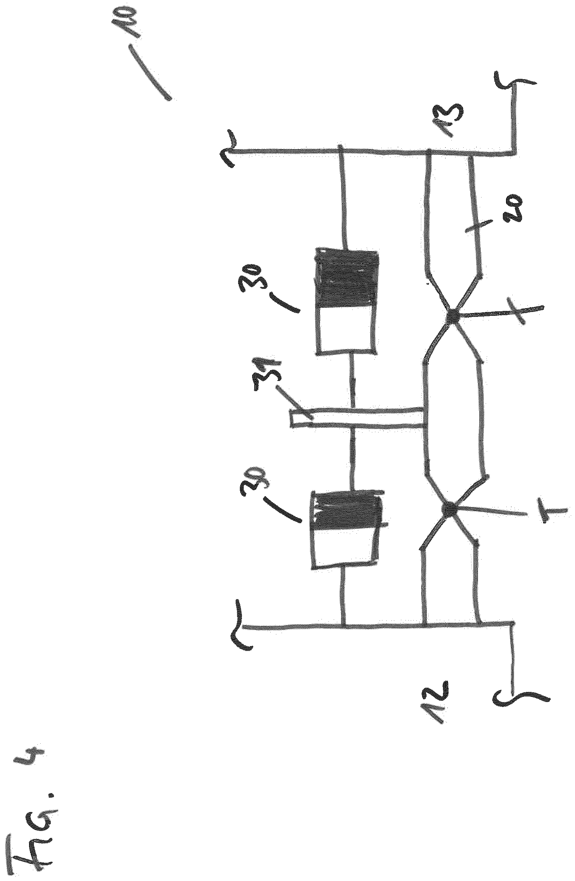

Figur 4 zeigt die Gelenkvorrichtung 20 mit dem Anschlagpunkt 31, den Aktuatoren 30, sowie dem Vorderwagen 12 und dem Hinterwagen 13, der in Figur 3 vergrößert. Die jeweilige Lage der Tiltachsen T muss im Wesentlichen nur zwischen dem Anschlagpunkt und dem jeweiligen Wagen (Vorderwagen oder Hinterwagen) liegen, sodass der zugeordnete Aktuator 30 den Vorderwagen 12 oder Hinterwagen 13 um die jeweilige Tiltachse T bewegen kann.

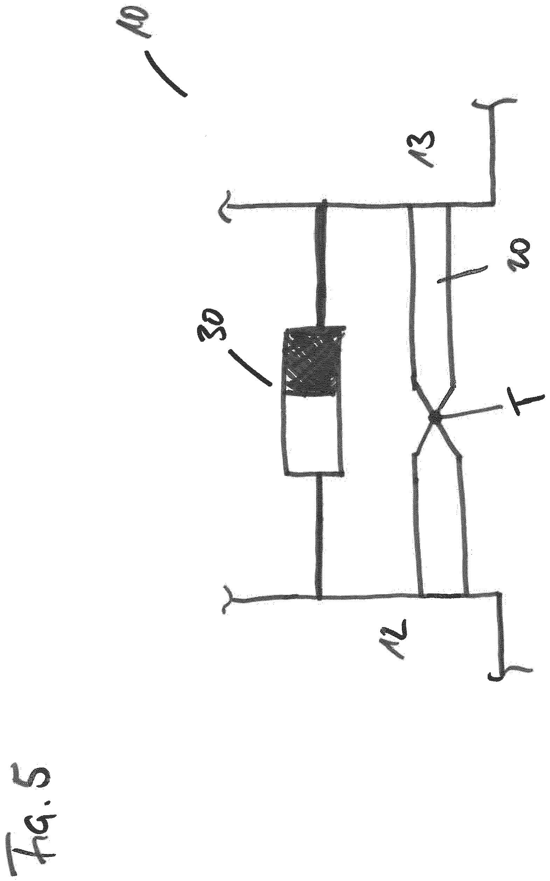

Figur 5 zeigt eine weitere Ausführungsform der Gelenkvorrichtung 20. Hierbei ist nur ein Aktuator 30 direktwirkend zwischen dem Vorderwagen 12 und dem Hinterwagen 13 angeordnet. Die Gelenkvorrichtung 20 weist nur eine Tiltachse T zischen dem Vorderwagen 12 und dem Hinterwagen 13 auf. Wird der Aktuator 30 durch die Steuerung (nicht gezeigt) basierend auf Fahrzeugdaten (siehe oben) angesteuert, so kann er entweder die beiden Wägen um die Tiltachse T zueinander hinziehen oder voneinander wegdrücken. Damit kann die Bodendruckverteilung des gesamten Fahrzeugs verändert werden.

Die voran genannten Vorteile und Merkmale der Erfindung müssen nicht in allen Ausführungsformen gleichzeitig vorhanden sein, sondern können untereinander beliebig kombiniert werden.

## Patentansprüche

1. Bodendruckverteilungssystem (10) für ein zumindest zweiteiliges Fahrzeug (11), umfassend:
• eine Gelenkvorrichtung (20), angeordnet zwischen den beiden Wagen (12, 13) und aufweisend zumindest eine Tiltachse (T),
• zumindest einen Sensor und
• eine Steuerung,
wobei der zumindest eine Sensor Fahrzeugdaten erfasst, die ein Aufbäumen bei Beschleunigen oder Eintauchen beim Bremsen des Fahrzeugs indizieren und mit der Steuerung verbunden ist und die Steuerung zumindest einen Aktuator (30) abhängig von den Fahrzeugdaten ansteuert, um einem Aufbäumen bei Beschleunigen oder Eintauchen beim Bremsen entgegenzuwirken, wobei der zumindest eine Aktuator wirkangeordnet bezüglich der zumindest einen Tiltachse der Gelenkvorrichtung ist, wobei der zumindest eine Sensor zumindest eines erfasst von: einem Antriebsdrehmoment und/oder einem Motordrehmoment und einer Gangstufe und/oder einer Fahrzeuglage.

2. Bodendruckverteilungssystem (10) nach Anspruch 1, bei welchem der zumindest eine Sensor oder ein weiterer Sensor eine Fahrzeugposition erfasst.

3. Bodendruckverteilungssystem (10) nach Anspruch 1 oder 2, weiterhin umfassend eine Fahrwerksfederung.

4. Bodendruckverteilungssystem (10) nach einem der vorangegangenen Ansprüche, weiterhin umfassend einen Federungssensor.

5. Bodendruckverteilungssystem (10) nach Anspruch 4, bei welchem der Federungssensor einen Federweg und/oder eine Federkraft erfasst.

6. Bodendruckverteilungssystem (10) nach einem der Ansprüche 3 bis 5, bei welchem die Federung einstellbar ist und die Steuerung mit der Fahrwerksfederung verbunden ist.

7. Bodendruckverteilungssystem (10) nach einem der vorangegangenen Ansprüche, bei welchem der Aktuator (30) ein elektrischer oder hydraulischer Aktuator ist.

8. Bodendruckverteilungssystem (10) nach einem der vorangegangenen Ansprüche, wobei die Gelenkvorrichtung zwei Tiltachsen (T) umfasst, wobei eine Tiltachse (T) einem Vorderwagen (12) zugeordnet ist und eine Tiltachse (T) einem Hinterwagen (13) zugeordnet ist.

9. Verfahren zur Bodendruckverteilung bei einem zweiteiligen Rad- oder Kettenfahrzeug (11), umfassend die Schritte:
- Erfassen von Fahrzeugdaten die ein Aufbäumen beim Beschleunigen oder Eintauchen beim Bremsen indizieren;
- Verarbeiten der Fahrzeugdaten in einer Steuerung; und
- Ansteuern von zumindest einem Aktuator (30) einer Gelenkvorrichtung (20) durch die Steuerung basierend auf den verarbeiteten Fahrzeugdaten um einem Aufbäumen bei Beschleunigen oder Eintauchen beim Bremsen entgegenzuwirken, wobei das Erfassen der Fahrzeugdaten zumindest eines umfasst von: erfassen eines Antriebsmoments und/oder erfassen eines Motordrehmoments und einer Gangstufe und/oder erfassen einer Fahrzeugposition oder Fahrzeugneigung und/oder erfassen von Federungsdaten umfasst, und wobei der zumindest eine Aktuator wirkangeordnet bezüglich zumindest einer Tiltachse der Gelenkvorrichtung ist.

10. Verfahren zur Bodendruckverteilung nach Anspruch 9, weiterhin umfassend den Schritt des Ansteuerns einer einstellbaren Fahrwerksfederung durch die Steuerung basierend auf den verarbeiteten Fahrzeugdaten.

## Claims

1. A ground pressure distribution system (10) for an at least two-part vehicle (11), comprising:
• an articulated device (20), arranged between the two carriages (12, 13) and having at least one tilt axis (T),
• at least one sensor and
• a control unit,
wherein the at least one sensor detects vehicle data which indicate a rearing up during acceleration or dipping during braking of the vehicle and is connected to the controller and the controller controls at least one actuator (30) as a function of the vehicle data in order to counteract a rearing up during acceleration or dipping during braking, wherein the at least one actuator is operatively arranged with respect to the at least one tilt axis of the articulation device, wherein the at least one sensor detects at least one of: a drive torque and/or an engine torque and a gear stage and/or a vehicle position.

2. Ground pressure distribution system (10) according to claim 1, in which the at least one sensor or a further sensor detects a vehicle position.

3. A ground pressure distribution system (10) according to claim 1 or 2, further comprising a chassis suspension.

4. A ground pressure distribution system (10) according to any one of the preceding claims, further comprising a suspension sensor.

5. Ground pressure distribution system (10) according to claim 4, in which the suspension sensor detects a spring travel and/or a spring force.

6. A ground pressure distribution system (10) according to any one of claims 3 to 5, wherein the suspension is adjustable and the control is connected to the chassis suspension.

7. A ground pressure distribution system (10) according to any one of the preceding claims, wherein the actuator (30) is an electric or hydraulic actuator.

8. Ground pressure distribution system (10) according to one of the preceding claims, wherein the articulation device comprises two tilt axles (T), wherein one tilt axle (T) is associated with a front carriage (12) and one tilt axle (T) is associated with a rear carriage (13).

9. A method of ground pressure distribution in a two-section wheeled or tracked vehicle (11), comprising the steps of:
- Recording of vehicle data that indicates a rearing up during acceleration or dipping during braking;
- Processing the vehicle data in a control system; and
- Actuation of at least one actuator (30) of an articulated device (20) by the control system based on the processed vehicle data in order to counteract rearing up during acceleration or dipping during braking,
wherein the detection of the vehicle data comprises at least one of: detecting a drive torque and/or detecting an engine torque and a gear ratio and/or detecting a vehicle position or vehicle inclination and/or detecting suspension data, and wherein the at least one actuator is operatively arranged with respect to at least one tilt axis of the articulation device.

10. The method for ground pressure distribution according to claim 9, further comprising the step of controlling an adjustable chassis suspension by the controller based on the processed vehicle data.

## Revendications

1. Système de répartition de la pression au sol (10) pour un véhicule au moins en deux parties (11), comprenant :
• un dispositif d'articulation (20), disposé entre les deux chariots (12, 13) et présentant au moins un axe de basculement (T),
• au moins un capteur, et
• une commande,
dans lequel ledit au moins un capteur détecte des données de véhicule indiquant un cabrage lors d'une accélération ou d'une plongée lors du freinage du véhicule et est connecté au dispositif de commande, et le dispositif de commande commande au moins un actionneur (30) en fonction des données de véhicule afin de contrecarrer un cabrage lors d'une accélération ou d'une plongée lors du freinage, ledit au moins un actionneur étant agencé de manière opérationnelle par rapport audit au moins un axe de tangage du dispositif d'articulation, ledit au moins un capteur détectant au moins un élément parmi : un couple d'entraînement et/ou un couple moteur et un rapport de vitesse et/ou une position du véhicule.

2. Système de répartition de la pression au sol (10) selon la revendication 1, dans lequel ledit au moins un capteur ou un autre capteur détecte une position du véhicule.

3. Système de répartition de la pression au sol (10) selon la revendication 1 ou 2, comprenant en outre une suspension de châssis.

4. Système de répartition de la pression au sol (10) selon l'une quelconque des revendications précédentes, comprenant en outre un capteur de suspension.

5. Système de répartition de la pression au sol (10) selon la revendication 4, dans lequel le capteur de suspension détecte une course de ressort et/ou une force de ressort.

6. Système de répartition de la pression au sol (10) selon l'une des revendications 3 à 5, dans lequel la suspension est réglable et la commande est reliée à la suspension du châssis.

7. Système de répartition de la pression au sol (10) selon l'une quelconque des revendications précédentes, dans lequel l'actionneur (30) est un actionneur électrique ou hydraulique.

8. Système de répartition de la pression au sol (10) selon l'une quelconque des revendications précédentes, dans lequel le dispositif d'articulation comprend deux axes d'inclinaison (T), un axe d'inclinaison (T) étant associé à un chariot avant (12) et un axe d'inclinaison (T) étant associé à un chariot arrière (13).

9. Procédé de répartition de la pression au sol dans un véhicule à roues ou à chenilles en deux parties (11), comprenant les étapes suivantes :
- Saisie des données du véhicule qui indiquent un cabrage à l'accélération ou une plongée au freinage ;
- le traitement des données du véhicule dans un système de commande ; et
- la commande d'au moins un actionneur (30) d'un dispositif d'articulation (20) par le contrôleur sur la base des données de véhicule traitées pour s'opposer à un cabrage lors d'une accélération ou d'une plongée lors d'un freinage,
dans lequel l'acquisition des données du véhicule comprend au moins l'un des éléments suivants : l'acquisition d'un couple d'entraînement et/ou l'acquisition d'un couple moteur et d'un rapport de vitesse et/ou l'acquisition d'une position du véhicule ou d'une inclinaison du véhicule et/ou l'acquisition de données de suspension, et dans lequel ledit au moins un actionneur est agencé de manière opérationnelle par rapport à au moins un axe d'inclinaison du dispositif d'articulation.

10. Procédé de répartition de la pression au sol selon la revendication 9, comprenant en outre l'étape consistant à piloter une suspension de châssis réglable par le contrôleur sur la base des données de véhicule traitées.
